# EUROPEAN PATENT APPLICATION

(11) **EP 2 091 247 A1**
(43) Date of publication of application: **19.08.2009**
(21) Application number: 09152812.5
(22) Date of filing: 13.02.2009
(51) Int. Cl.: H04N 5/781, H04N 9/804

(54) **Digital video recorder, method for recording and remote control unit therefor**

(30) Priority: 13.02.2008 GB 0802655
(71) Applicant: X-sight Digital Limited, 207 Chamberlayne Road Eastleigh Hampshire SO50 5HZ (GB)
(72) Inventor: Harwin, Anthony, Alresford Hampshire SO24 9ND (GB); Hickman, James, Eastleigh Hampshire SO50 5HZ (GB)
(74) Representative: Treleven, Colin

(57) **Abstract**

A multi-channel digital video recorder (100) is adapted to record video input signals from at least two sources (102, 104, 110, 112, 114). The multi-channel digital video recorder (100) comprises MPEG codec means (118, 120), for generating MPEG data from the said video input signals, the said MPEG codec means operating according to a set of recording parameters. The multi-channel digital video recorder (100) further comprises memory means (126x, 126y, 146) for storing MPEG data from the MPEG codec means (118, 120). The multi-channel digital video recorder (100) is adapted to allow a user to select the set of recording parameters from a plurality of sets of recording parameters. The selection may be made from a remote control unit (200). The sets of recording parameters may be uploaded to the multi-channel digital video recorder (100) from a PC.

## Description

### Field of the invention

The field of the invention relates to a digital video recording device, a digital video recording system with a remote control unit, and methods for digital video recording. The invention can be used for recording video and audio signals in a wide variety of situations, and may be used in personal and portable applications.

### Background of the Invention

The following video and audio recorders are known:
(i) The Archos^{™} DVR, which records MPEG4 video via wired remote camera. This device uses a wired remote control unit and saves recorded video to SD flash card.
(ii) The Panasonic^{™} 3CCD video camera, which has a three second fixed pre record buffer that cannot be configured by the user. This prior art device records to removable storage media.
(iii) Samsung^{™} sells a video camera that uses a wired remote camera.
(iv) Persides Ltd appears to be offering for sale a video recorder with a single camera that is connected to a console by a shielded cable. An integral screen would be provided for viewing video. As a 'future upgrade', a wireless remote would offer video record/pause operation. See: www.vee-cam.com

None of the aforementioned devices is known to support recording settings that can be configured by a user, or from a remote control unit. Neither do they support uploadable configurations of recording settings. In addition, none of the aforementioned devices is known to support the display of unit status, recording parameters or video on a wireless remote control. None of the aforementioned devices allows a user to select a duration of video to be recorded prior to the record button being pressed.

Published US patent application US2006/0133476 (Page et al.) describes a digital video surveillance system that includes a video server in a law enforcement vehicle. The system includes a memory buffer that is recording at all times. When the recorder is activated, the memory buffer contents, including video and audio, are recorded before the system starts recording directly from the video camera. In one embodiment, described in paragraph [0151] of US'476, a user can select the MPEG standard to be used, e.g. MPEG-1, MPEG-2 or MPEG-4. The user may also select the value of one parameter for the operation of the system, namely the recording rate. The values of the recording rate available to the user are 'Good', 'Better' and 'Best'.

Published European Patent Application EP-A-1204933 (Infinite Pictures), corresponding to WO-A-00/70486, describes a system for digitally capturing and recording panoramic images. A wide variety of parameters for the operation of the system can be set by a user.
In the light of the background information discussed above, there exists a need for a method and apparatus for providing enhanced video recording performance.

### Summary of the Invention

Accordingly, the invention seeks to eliminate one or more of the abovementioned disadvantages, singly or in any combination.

According to a first aspect of the invention, there is provided a multi-channel digital video recorder, adapted to record video input signals from at least two sources. The multi-channel digital video recorder comprises MPEG codec means, for generating MPEG data from the said video input signals, the said MPEG codec means operating according to a set of recording parameters; and memory means for storing MPEG data from the MPEG codec means. The multi-channel digital video recorder is adapted to allow a user to select the said set of recording parameters from a plurality of sets of recording parameters.

In one optional embodiment of the invention, the said set of recording parameters may comprise pre-defined values for the parameters: bit rate; image resolution; and frame rate. The set may comprise pre-defined values for each channel of the multi-channel digital video recorder, with different values for each channel.

In one optional embodiment of the invention, the multichannel digital video recorder may comprise a memory buffer; and an activation button wherein the memory buffer may be adapted to store a portion of the MPEG data, prior to operation of the activation button. The multi-channel digital video recorder may be adapted to save the said portion of the MPEG data from the memory buffer, when the activation button is operated.

In one optional embodiment of the invention, the set of recording parameters may comprise a predefined value for the duration of the portion of the MPEG data stored in the memory buffer.

In one optional embodiment of the invention, a separate MPEG codec may be used for each said source. The multichannel digital video recorder may be adapted to allow a user to select a different set of recording parameters for each MPEG codec, from the said plurality of sets of recording parameters.

In one optional embodiment of the invention, the predefined values for the individual parameters in each set of recording parameters may be changed by a PC, a laptop or a PDA, thereby creating a new set of recording parameters, and the new set of recording parameters can be uploaded to the multi-channel digital video recorder.

In one optional embodiment of the invention, the multichannel digital video recorder may be adapted to record the MPEG data from each of said video input signals to an independent, full size file.

In one optional embodiment of the invention, the multichannel digital video recorder is adapted to be portable.

According to a second aspect of the invention, there is provided a multi-channel digital video recording system comprising a recording unit, adapted to record video input signals from at least two sources. The recording unit comprises MPEG codec means, for generating MPEG data from the said video input signals, the said MPEG codec means operating according to a set of recording parameters. The recording unit further comprises memory means for storing MPEG data from the MPEG codec means. A remote control unit, for controlling the recording unit, comprises wireless communication means, adapted to communicate with the recording unit, and a user interface element. The remote control unit is adapted to allow a user to select the said set of recording parameters from a plurality of sets of recording parameters, remotely.

According to a third aspect of the invention there is provided a remote control unit for remotely controlling a multi-channel digital video recording unit. The remote control unit comprises wireless communication means, adapted to communicate with the video recording unit; and a user interface element. The remote control unit is adapted to allow a user to remotely re-configure a set of recording parameters of an MPEG codec means of the video recording unit from a plurality of sets of recording parameters.

According to a fourth aspect of the invention, there is provided a method for recording on a multi-channel digital video recorder comprising recording video input signals on the multi-channel digital video recorder from at least two sources. The method further comprises generating MPEG data from the said video input signals according to a set of recording parameters, and storing the generated MPEG data from the MPEG codec means. The method further comprises providing an opportunity for a user to select the said set of recording parameters from a plurality of sets of recording parameters.

According to a fifth aspect of the invention there is provided a method for recording on a multi-channel digital video recording system comprising recording video input signals from at least two sources and generating MPEG data from the said video input signals according to a set of recording parameters. The method further comprises storing MPEG data from the MPEG codec means and providing an opportunity to a user of said multi-channel digital video recording system to remotely control said recording unit by selecting the said set of recording parameters from a plurality of sets of recording parameters.

According to a sixth aspect of the invention there is provided a computer-readable storage element having computer-readable code stored thereon for programming signal processing logic to perform a method for recording on multi-channel digital video recorder according to any of the previous aspects.

These and other aspects, features and advantages of the invention will be apparent from, and elucidated with reference to, the embodiment(s) described hereinafter.

The invention is of use in many fields. Examples include:
(i) Sports and leisure, e.g. outdoor sports such as many snow sports, sky diving, mountain biking, car racing and remote control models.
(ii) Security, e.g. door staff, patrol activities.
(iii) Professional workers such as driving instructors, police, military, fire services and coastguards.
(iv) Vehicle equipment manufacturers.
(v) Clothing manufacturers, where the invention could be worn as an integral part of sports clothing such as a motorcycle helmet.

### Brief Description of the Drawings

Embodiments of the invention will be described, by way of example only, with reference to the accompanying drawings, in which:
FIG. 1 illustrates a video recorder unit adapted to support an embodiment of the invention.
FIG. 2 illustrates a remote control in accordance with an embodiment of the invention.
FIG. 3 illustrates a flowchart in accordance with embodiments of the invention.
FIG. 4 illustrates a flowchart in accordance with embodiments of the invention.
FIG. 5 illustrates a typical computing system that may be employed to implement processing functionality in embodiments of the invention.

### Detailed Description of Embodiments of the Invention

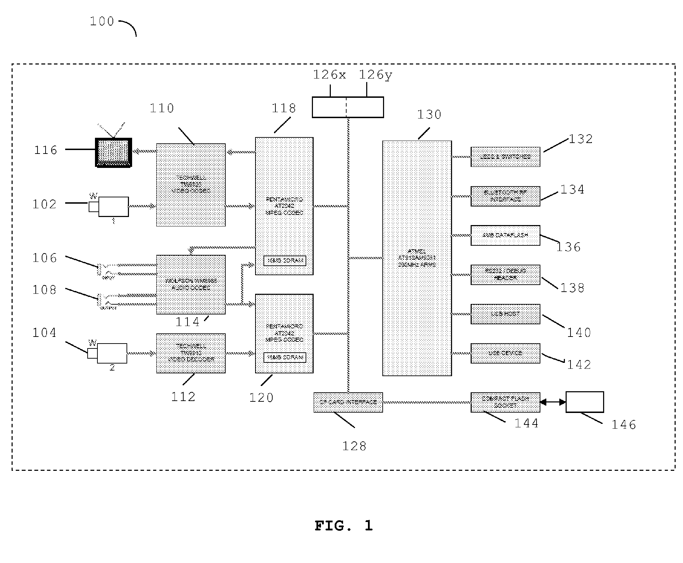

FIG. 1 shows one embodiment of a video recorder in accordance with the invention. Although termed a 'video recorder', the video recorder of the invention would in normal usage also record audio signals, which are stored together with the video signals as a single data stream.

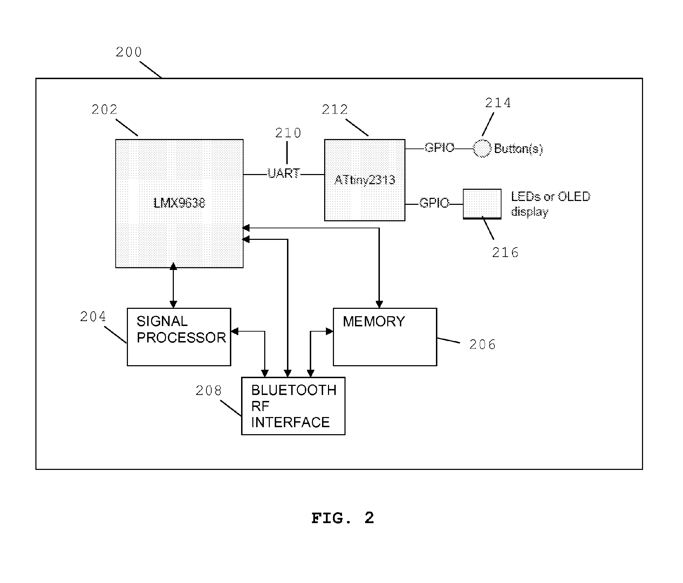

FIG. 2 shows part of a second embodiment of the invention. The second embodiment differs from the embodiment of FIG. 1 in that a remote control unit 200 is provided for controlling the video recorder. The remote control unit 200 of FIG. 2 works together with a video recorder having similar functional elements to those shown in FIG. 1.

Referring now in detail to the drawings, and in particular FIG. 1, a video recorder unit 100 is shown, adapted to support various embodiments of the invention.

Video recorder unit 100 comprises a 200MHZ ARM9 digital signal processor 130 operably coupled to an input/output element, in a form of light emitting diodes (LEDs) and switches 132. Processor 130 functions as the CPU. A screen may act as a display, in place of or in addition to the light emitting diodes and switches 132.

The video recorder unit 100 also comprises a Bluetooth^{™} radio frequency (RF) Interface 134, a 4MB Dataflash memory element 136 and RS232/Debug Header logic 138. Debug and report printing is performed through the RS232 port.

Video recorder unit 100 also comprises universal serial bus (USB) host logic 140, USB logic device 142 and a Flash socket, for example Compact Flash Socket 144. USB 142 allows the input and output of data to load and debug the operating system software. Compact Flash card 146 can be inserted into socket 144. Other Flash memory can be used, i.e. non-compact flash memory.

The 200MHz ARM9 130 is operably coupled to 32MB SDRAM 126 and CF Card Interface 128. Memory 126 may be partitioned into a buffer memory portion 126X, leaving the remainder of the memory 126Y for program storage.

An MPEG codec 118 is operably coupled to video codec 110 and Audio codec 114. MPEG codec 120 is operably coupled to Video Decoder 112 and audio codec 114.

A TV 116 may be operably coupled to Video Codec 110. Video source 102 is operably coupled to Video Codec 110. Input 106 is operably coupled to Audio Codec 114. Output 108 is operably coupled to Audio Codec 114. Video source 104 is operably coupled to Video Decoder 112.

Referring now to FIG. 2 a remote control 200 is illustrated that has been adapted to be capable of use with the video recorder unit 100 of FIG. 1. According to embodiments of the invention the remote control unit 200 comprises: wireless communication means, adapted to communicate with the video recording unit; and a user interface element. The remote control unit 200 is adapted to allow a user to remotely re-configure a set of recording parameters of an MPEG codec means of the video recording unit from a plurality of sets of recording parameters.

Remote control 200 comprises processor LMX9638 202, operably coupled to signal processor 204, which is, in turn, operably coupled to Bluetooth RF Interface 208. The Bluetooth RF Interface 208 is operably coupled to memory 206. UART 210 is operably coupled to processor ATtiny2313 212, which is operably coupled to the user input element.

The user input element takes the form of depressable button(s) 214, and LEDs or OLED display 216. However, the remote control unit may contain a screen as the display. Inputs could then be in the form of contact with a touch screen.

Although embodiments of the invention are described with reference to a remote control unit remotely controlling a video recorder unit via a Bluetooth communication link, it is envisaged that other forms of wireless communication link maybe used in alternative embodiments. Examples would be Wifi, wireless local loop (WLL), infra-red or other radio frequency communication links.

In one embodiment of the invention, it is envisaged that the remote control unit may fulfil a dual purpose. In a first mode of operation, when the remote control unit 200 is operably attached to the video recorder unit, it is envisaged that the remote control unit 200 operates as a user interface to the video recorder unit 200. In this embodiment, it is envisaged that a display unit on the remote control unit may be utilised as a video display (video recording or as playback). In a second mode of operation, when the remote control unit is detached from the video recorder unit, the remote control unit 200 operates as a wireless remote control unit to configure operational parameters of the video recorder unit. Again, in this second mode of operation, a display of the remote control unit may be configured to remotely display video data (for example video data being recorded or playback data) wirelessly received from the video recorder unit (for example, via a Wifi, Bluetooth, WLL, or infra-red communication link).

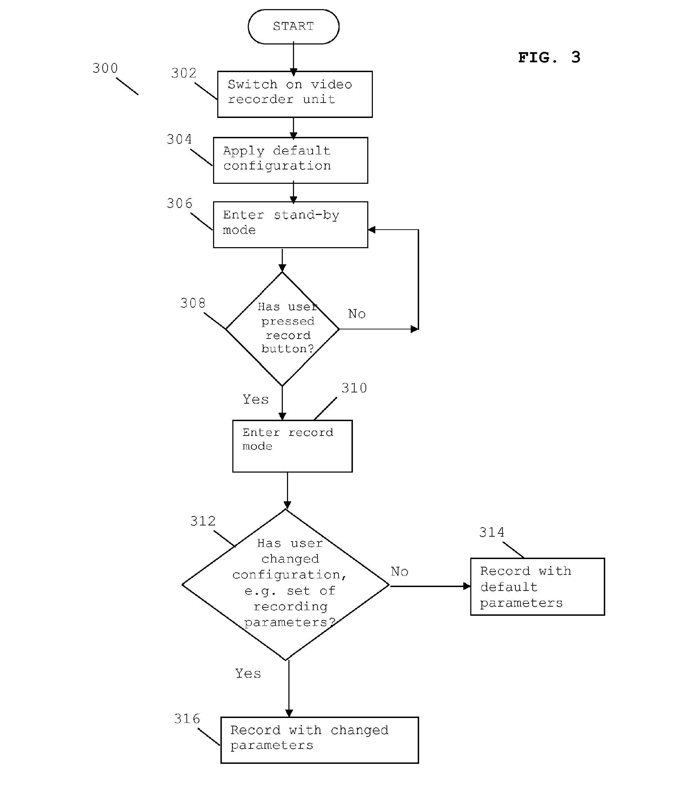

Referring now to FIG. 3, a flowchart 300 is shown illustrating configurable operations and operational modes of the aforementioned video recorder unit. The method commences with a switching 'on' of the video recorder unit in step 302. Upon switch 'on', the unit applies default configuration on its operational parameters, as shown in step 304. Subsequently, the video recorder unit enters a 'stand-by' mode of operation, as in step 306. A determination is then made as to whether a user has pressed a record button, in step 308. If the user has not pressed a record button, in step 308, the method loops back to the 'stand-by' mode of step 306.

However, if the user has pressed a record button, in step 308, the video recorder unit enters a 'record' mode of operation, as shown in step 310. A determination is then made as to whether the user has changed an operational configuration of the video recorder unit, for example whether at least one of a set of recording parameters has been modified, as shown in step 312. If the user has not changed an operational configuration of the video recorder unit, in step 312, the video recorder unit records using default parameters, as shown in step 314. If the user has changed an operational configuration of the video recorder unit, in step 312, the video recorder unit records using the reconfigured parameters, as shown in step 316.

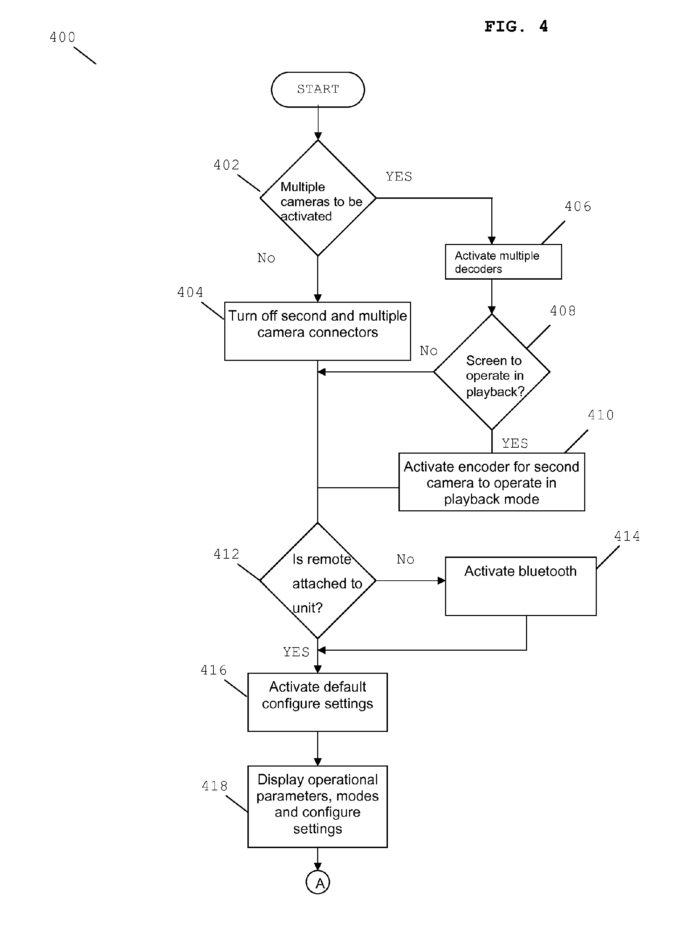

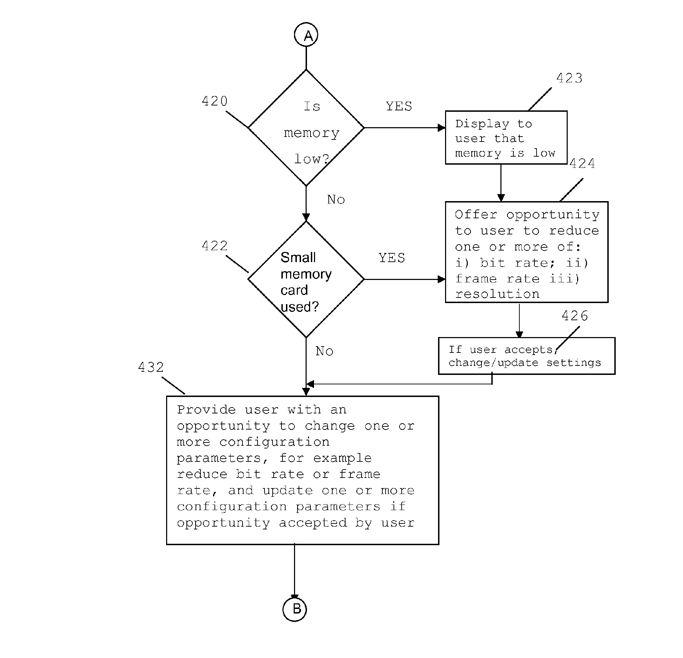

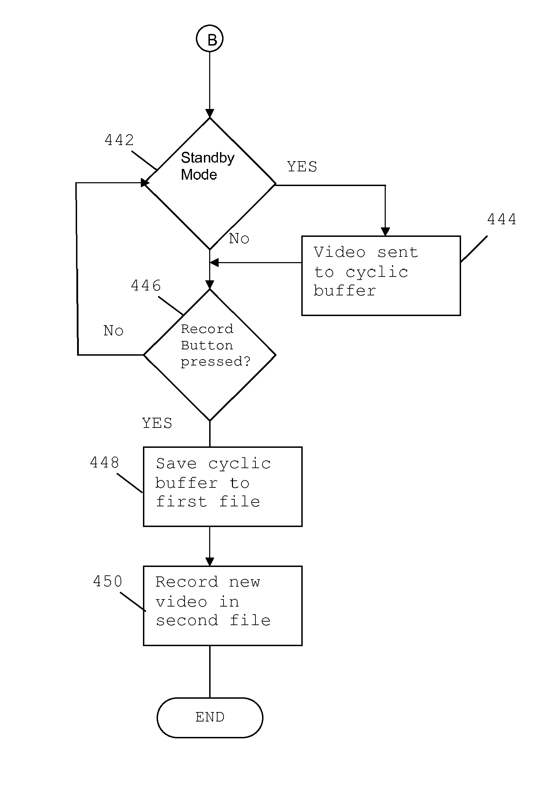

Referring now to FIG. 4, a flowchart 400 is shown illustrating configurable operations and operational modes of the video recorder unit. The method commences with a determination as to whether multiple cameras are to be activated, as shown in step 402. If, in step 402, it is determined that multiple cameras are not to be activated, second and multiple camera connections are turned off, as shown in step 404. The method moves on to step 412.

However, if, in step 402, it is determined that multiple cameras are to be activated, as shown in step 402, multiple decoders are activated, as shown in step 406. A determination is then made as to whether a video unit screen is to operate in playback mode, in step 408. If, in step 408, it is determined that a video unit screen is not to operate in playback mode, the method moves on to step 412. If, in step 408, it is determined that a video unit screen is to operate in playback mode, the method moves on to step 410, where at least one encoder is activated to enable the second camera to operate in playback mode, as shown in step 410.

In step 412, a determination is made as to whether a remote control unit is attached to the video unit. If, in step 412, a determination is made that a remote control unit is not attached to the video unit, Bluetooth^{™} functionality and the remote control unit display is activated, as shown in step 414.

The method moves on to step 416, where the video unit activates its default configuration settings, as shown in step 416. The video unit and/or remote control unit is configured to display operational parameters modes and configure settings, as shown in step 418.

A determination is then made as to whether the available memory in one or more memory elements in the video unit is below a threshold, as shown in step 420. If it is determined that the available memory in one or more memory elements in the video unit is below a threshold, in step 420, the method moves to step 423. If it is determined that the available memory in one or more memory elements in the video unit is not below a threshold, in step 420, the method moves to step 422.

In step 423, the fact that the memory is low is displayed to the user. The method then moves to step 424, described below.

In step 422, a determination is made as to whether a small memory card is installed in the video recorder unit. If it is determined that a small memory card is installed in the video recorder unit, in step 422, the method moves to step 424. If it is determined that a small memory card is not installed in the video recorder unit, in step 422, the method moves to step 432.

In step 424, following a determination that the available memory in the video unit is below a threshold, or if a small memory card is being used, the user of the video unit is offered an opportunity to conserve memory space in video to be recorded by selecting an alternative configuration of one or more of the following:
i) bit rate,
ii) frame rate,
iii) resolution.

If the user of the video unit accepts the offer, the video unit configuration settings are changed/ updated, as shown in step 426. The method then moves to step 432.

In step 432, a user is provided with an opportunity to change one or more configuration parameters, for example by reducing bit rate or frame rate, and one or more configuration parameters are updated if the opportunity is accepted by the user. For example, a user may decide to change one or more configuration parameters if the one or more objects to be videoed is/are slow moving and/or far away. In addition, a user may decide to change one or more configuration parameters if the one or more objects to be videoed is/are fast moving and/or near.

A determination is then made as to whether the video unit is in a standby mode, as shown in step 442. If it is determined that the video unit is not in a standby mode, in step 442, the method then moves to step 446. If it is determined that the video unit is in a standby mode, in step 442, video data is captured and sent to a cyclic buffer contained within the video unit to provide a pre-record data store, as shown in step 444. The method then moves to step 446.

A determination is then made as to whether the video unit record button is pressed (or a remote control record button is pressed), in step 446. If it is determined that the video unit record button is not yet pressed (or a remote control record button is not yet pressed), in step 446, the method loops back to step 442 and further data is stored in the cyclic buffer.

If it is determined that the video unit record button is pressed (or a remote control record button is pressed), in step 446, the (pre-recorded) video data in the cyclic buffer is saved to a first memory data file, as shown in step 448. New video data is then recorded to the same memory data file to form a continuous data file, as shown in step 450.

The video streams may be recorded onto Flash memory. The files can then be downloaded to a PC via the USB connector, or by removing the Compact Flash card for manipulation later. The unit is controlled either from a number of buttons on the unit, or from buttons on a wireless remote control.

The digital video recorder of the invention is a multi channel digital video recorder, which may be adapted to use remote cameras. The digital video recorder can be powered by rechargeable batteries. The remote cameras may be wired to the digital video recorder. In one embodiment of the invention, one or more of the multiple cameras may be detachable from the digital video recorder.

In operation, codec 110 decodes the input from video source 102 into a digital output stream that is supplied to codec 118. Codec 118 converts the digital output from processor 110 into MPEG data. Codec 112 decodes the input from video source 104 into a digital output stream that is supplied to codec 120. Codec 120 converts the digital output from processor 112 into MPEG data.

The MPEG data from codecs 118 and 120 may be stored in memory 126 or Compact Flash memory 146, under control of CPU 130.

Memory element 126 may be partitioned into two sections, shown as 126x and 126y. Section 126x can serve as a memory buffer. In operation, buffer 126x stores the latest portion of MPEG data provided by codec 118 and or codec 120. Buffer 126x therefore acts as a cyclic buffer.

The duration of the portion of MPEG data stored in buffer 126x may be controlled by the user. This duration may be made equal to a pre-defined value that forms part of a set of recording parameters, which in turn can be selected by the user. By selecting a different set of recording parameters from a plurality of sets of recording parameters, the user can therefore change the duration. The duration might therefore take on values such as 5 seconds, 10 seconds, 15 seconds.

Alternatively, compact flash card 146 may also be adapted to provide the buffer memory. In such an arrangement, the latest portion of MPEG data from codec 118 and/or codec 120 would be continuously written to a section of Compact Flash card 146. This arrangement would provide scope for a buffer memory of many minutes. If a set of recording parameters were chosen with very low image resolution, bit and frame rates, then current compact flash memory cards would offer the possibility of a buffer memory with a duration of several hours.

Compact Flash memories offer the possibility of more reliable function than other forms of memory, since they can include plug type contacts which are reliable when subjected to vibration and wear.

The activation button function may be provided by one of the switches shown at 132 in figure 1, or by button(s) 214 in figure 2. The button may for example be a slide switch, a pressure sensitive membrane type arrangement or an icon on a display. However, equivalents such as voice activation or a motion sensor could fulfil the same switching function.

When the user activates the activation button, the video recorder can be arranged to save the contents of the buffer memory 126X or 146 to long-term memory. Following that transfer, a user would need to actively overwrite the data when it was no longer needed. This is in contrast to the function of a cyclic buffer memory, which continuously overwrites the data that it stores as new data arrives.

As explained above, the video recorder may be arranged to store the contents of the buffer memory when the user operates the activation button. Operation of the activation button may however also cause the video recorder to switch from a standby to a record mode. Whilst in record mode, the multi-channel digital video recorder 100 saves MPEG data from the codec 118 and/or 120 directly to memory 126 or 146, without storing a portion of the MPEG data in the memory buffer 126X or 146. The video recorder can therefore be arranged to use the memory buffer 126X or 146 as a 'pre-record' memory buffer, which only operates during standby mode.

One advantage of the arrangement with the separate codecs 110 and 112 of figure 1 is that the user can be allowed to select a different set of recording parameters for each codec, from the plurality of sets of recording parameters. Codecs 110 and 112 might, for example, operate at different frame rates, if one video source is located close to high speed action, whilst the other video source is providing only background shots.

The multichannel digital video recorder of the invention records each video stream as a separate file. The file might be a full 'D1' sized file, of 720 x 576 pixels, or a CIF file. The known prior art devices listed in the 'Background Section' above are believed to differ from the invention in their approach to storing images from multiple video sources. As far as is known, the prior art devices that can record data from multiple video sources simultaneously achieve this either by recording multiple images into one data file as 'split screen', or using a 'picture in picture' approach.

The multichannel digital video recorder of the invention is constructed using multiple encoder/decoder and codec chips. The embodiment of the invention illustrated in the figures includes a powerful ARM9 microprocessor. This arrangement is sufficiently powerful to permit individual D1 files for each video feed. There is also a large memory 126X for the pre-record buffer. In the embodiment of the invention that includes a wireless remote control unit, the wireless remote has a microprocessor to control the display and functions.

The files can be played directly onto a TV 116 from the digital video recorder. This can be achieved via the video out connectors and a combination of an On Screen Display (OSD) and the buttons on the video recorder 100 or the remote control 200. The video recorder can display a menu structure on the TV, or its own display screen, to allow files to be selected and played to the TV and settings to be altered.

Turning now to the control that a user can exercise over the recording, the multichannel digital video recorder of the invention can, for example, hold four recording configurations. Each recording configuration contains a 'set' of recording parameters, with predefined values.

The particular set of recording parameters to be used at one time can be selected via keys on the video recorder itself, or keys on the wireless remote, or via the screen if provided.

The multi-channel video recorder unit may allow for a set of parameters to control each channel independently.

Table 1 shows an example of the values of parameters that may be included in each of four sets of parameters.

**Table 1**

| | | **Set 1** | **Set 2** | **Set 3** | **Set 4** |
|---|---|---|---|---|---|
| **Channel 1** | **Resolution** | 720 x 480 | 320 x 240 | 720 x 480 | 320 x 240 |
| | **Bit rate** | 128 kbit/s | 32 kbit/s | 128 kbit/s | 32 kbit/s |
| | **Frame rate** | 25 Frames/s | 10 Frames/s | 25 Frames/s | 15 Frames/s |
| **Channel 2** | **Resolution** | 720 x 480 | 320 x 240 | 320 x 240 | 720 x 480 |
| | **Bit rate** | 128 kbit/s | 32kbit/s | 32 kbit/s | 64 kbit/s |
| | **Frame rate** | 25 Frames/s | 10 Frames/s | 10 Frames/s | 20 Frames/s |

By selecting set 1 in table 1, the user would be choosing a resolution of 720 x 480 for both channel 1 and channel 2. For both channels, the bit rate would be 128 kbits/s, and the frame rate would be 25 frames per second. However, if the user were to select set 3, then the parameters would be a resolution of 720 x 480 for channel 1, but a resolution of 320 x 240 for channel 2. Set 3 would also provide a bit rate of 128 kbits/s for channel 1, but 32 kbits/s for channel 2. The frame rate for channel 1 would be 25 frames/s, but that for channel 2 would be 10 frames/s.

The predefined values for the individual parameters in each set of recording parameters can be changed by a PC, a laptop or a PDA. This gives the user the possibility of creating a new set of recording parameters. The new set of recording parameters can be uploaded to the multichannel digital video recorder.

In normal use of the multi-channel video recorder, values for the parameters are configurable via a PC prior to using the recorder. Once the sets of parameters have been loaded from a PC to the recorder, they are available for a user to select. The task performed by the user of the recorder then reduces to selecting a particular set, using the control interface. When using the multichannel video recorder outdoors for example, the user can select a new set in a very short time period. The selection decision may be based, for example, on the speed of movement or duration of activity that the user wants to film next.

Instead of having pre-defined sets of parameters, uploaded to the recorder prior to use, the video recorder could, alternatively, be designed to allow the user to change the individual pre-defined parameter values contained in each set using keys on the recorder or wireless remote control. However, this would require a high level of understanding on behalf of the user, for example an understanding of issues such as the effect of bit rate on available memory capacity.

In one embodiment of the invention, the wireless remote control can be separably mechanically coupled to the recording unit. This allows the user either to use the wireless remote at a distance, or to attach the wireless remote to the main video recorder unit 100. For example, control of a helmet or dashboard mounted video recorder, whilst the user participates in sport or is a passenger in a vehicle, could be done at the user's discretion either remotely or with the remote control clipped onto the video recorder.

In one embodiment of the invention, it is envisaged that the digital video recorder unit may comprise its own display, irrespective of whether the remote control unit (whether detachably couplable to the video recorder unit or not) also comprises its own display.

Turning now to a detailed discussion of the memory buffer 126X or 146, this buffer memory stores a portion of the input signal cyclically. So the portion of the input signal held in this 'pre-record' buffer is always the most recent input signal. When a user activates the record button, the portion of the input signal stored in the pre-record buffer can be saved, for example by transferring it from memory 126X into the Compact Flash memory 146, i.e. it will not be lost.

The following recording parameters can be user-configurable, i.e. they can be altered by the user: bit rate; resolution; frame rate; and the pre-record buffer size.

This allows the user to choose a recording configuration depending on the size of file that the user wishes to produce. So the user can lower the bit rate, frame rate and/or resolution, in order to decrease the file size. This will allow the user the option of altering the file size if, for example, the digital video recorder is running low on memory, or only has a small memory card.

The user may also choose to change the recording parameters to suit the subject matter being recorded. That subject matter may be, for example, near or far away. It might also be fast or slow moving.

If the digital video recorder is recording a slowly moving object that is far away, then the user can use a lower bit rate and frame rate. The user can film faster close action by using a higher bit rate and frame rate, for greater detail quality.

Having a removable Compact Flash card allows the user to change it when full.

The digital video recorder unit can be charged from a mains adapter. Overload circuitry can be provided, so that it can be charged from a vehicle power supply for charging 'on the go'. This means that, if the unit is recording car or bike track days, the user will not be so likely to find that the batteries have run flat before the day is finished.

One particular embodiment of the unit has:
(i) two bespoke connectors for video, although more are provided when the digital video recorder is to be used with more than two remote cameras;
(ii) one connector for audio;
(iii) one connector for power;
(iv) one USB port, to connect to a PC, laptop or Personal Digital Assistant (PDA);
(v) one USB host socket- the unit can be either a host or device, so it can connect to other USB devices;
(vi) video out connector, to play files directly, for example to TV;
(vii) one Flash, for example, Compact Flash (CF) socket;
(viii) one socket to 'daisy chain' additional batteries. A separate battery unit can be plugged directly into the power connector for additional recoding time.

In one embodiment, there is a membrane on the digital video recorder that has buttons for a user interface. The user interface can be used to: turn the unit on and off; put it into standby; select the preset configuration; and start and stop recording.

The user interface can be equipped with four LEDs, aligned in a row. These LEDs, in combination with mode LEDs, can show: the current recording configuration (1, 2, 3 or 4) that the unit is in; how much battery is remaining (0%, 25%, 50% or 100%); amount of memory space left (percentage as before). There are also LEDs to show when the unit is ON, recording and charging.

The digital video recorder can take two or more camera feeds. The cameras may be bespoke devices. The cameras can be 'off the shelf' cameras, but this requires a connector converter. The digital video recorder decodes the analogue signals to digital, using codecs 110 and 112. The digital video signals are then converted into MPEG video streams by codecs 118 and 120, which are then mixed with the digital audio stream from codec 114, to provide a mixed stream. Each mixed stream will be recorded into an independent file.

When the digital video recorder is in standby mode, the mixed streams are sent to memory buffer 126x or 146. The memory buffer continually cycles the video stream until the record button is pressed. When this happens, all the video that is in the buffer gets given a file name and dumped to the Compact Flash memory. When this occurs, the file is not closed and the MPEG stream that continues to be generated by codecs 118 and 120 will be saved to the Flash memory until the stop button is pressed. The unit will then return to standby mode, where the buffer will cycle the MPEG streams.

The digital video recorder can be controlled by an ARM9 chip that runs the Linux OS code and the system I/O.

The digital video recorder may have a Bluetooth RF interface, which allows it to communicate with the wireless remote. This interface also allows the digital video recorder to communicate with other Bluetooth enabled devices such as phones, computers, PDA's. For example, this will allow applets to be written so the unit can be controlled by a phone and also play the video out on a mobile phone.

If only one camera is attached, the digital video recorder will automatically detect this. It will turn off power to the connector, and will also prevent a second empty file being produced.

In the embodiment with a wireless remote control, the remote control has buttons which duplicate the ones on the digital video recorder unit itself. The remote control can communicate with the digital video recorder unit on a Bluetooth compatible RF interface.

The remote control unit can be in the form of buttons only, or may comprise buttons and a display. The remote control unit itself has a microprocessor to control LEDs, buttons and a display via the GPIO lines. This allows the displaying of the digital video recorder status. It also allows the playout of stored and realtime video onto a screen on the remote control.

The same preset configurations that can be selected on the digital video recorder can also be selected from the remote control. The parameters of the preset configurations that are on the digital video recorder can be altered on a PC and uploaded to the unit.

With the digital video recorder of the invention, the user does not have to record unwanted video footage, which would take up memory space. However, if an incident happens, then the user can press the record button after the event has occurred and save the contents of the buffer to memory. The invention could be employed by security guards, police etc when involved in an incident. The lead up to the incident will be stored in the memory buffer, so can be retained, and evidence will not be lost. The duration for which the unit can be used on a patrol, for example, is increased by the option for the user to change the set of recording parameters.

An embodiment of the invention comprises two video decoders 110, 112 and two MPEG codecs 118, 120. One of the decoders 110 also functions as an encoder, which can be used simultaneously for playback to display 116. This allows, for example, simultaneous playback and recording of video.

The TV Playout function uses an on screen display to show file choice on TV, with file selection from the digital video recorder unit. The playout feature will be used to playback files that are stored on the Compact Flash card. These can be played out directly onto a TV using an on screen display. The display is driven by the digital video recorder, and is controlled by the buttons on the unit or remote. The playout feature will also be used if the unit doesn't have a screen. For example, the digital video recorder can be plugged into a pocket TV for camera alignment, orientation etc.

The digital video recorder can also be connected to additional battery packs. This will give the user extra running time if there is no means of charging e.g. a long mountain climb, a bike ride, an expedition.

The digital video recorder can utilize a docking station to connect to an installation. This is of value, for example, when integrating the unit into vehicle. In this case, the wiring for the power and cameras does not need to be removed.

Multiple cameras can be powered directly from the digital video recorder. This is achieved using the video connectors on the unit, which contain power pins. Bespoke batteries can be used to provide more power. A specifically designed power and charging circuit, with overload protection, can be incorporated to optimise this function.

A user can adjust the recording parameters of the digital video recorder according to the amount of memory left. Changing the recording bit rate, resolution and number of frames per second will change the file size of the recording. Different parameters can be used for different activities. If the user is out for an extended period and only has one Flash card and the memory capacity is getting low, then the configuration can be changed to produce a file of a smaller size. For motor sports, the user might use a high frame rate, bit rate and resolution. A steward at a football ground might use a lower bit rate and/or frame rate.

In one embodiment, the user doesn't need access to the digital video recorder unit to change the recording parameters. This can instead be done via the wireless remote control unit. When a wireless remote control unit is provided, the remote control unit may display the digital video recorder status via the wireless remote.

A user can load alternative recording parameters to the unit via a PC to allow greater functionality. The remote control unit allows the recording of multiple full screen images. This allows greater post-recording manipulation, and better image quality on multiple cameras. This is done using multiple decoders and codecs. This arrangement may not have been used in prior art devices due to the lack of memory size, available power, and/or available processing power. Clearly, the developers of prior art systems may not have recognised the potential in these features.

If a converter is provided, then "off the shelf cameras" can be used, for greater versatility. However, bespoke X-Sight cameras may be used to provide greater resistance to environmental conditions.

In order to increase the usage time and opportunities for recharging, the video recorder may be plugged directly into a vehicle power supply. Having a specifically designed charging circuit including overload protection allows the unit to be charged from such a power supply.

The video recorder allows easy set up of the cameras i.e. location, direction, orientation etc. The 'TV out' function means that the user can connect the video recorder to a pocket TV.

Changing parameters will allow extended recording time if the user is unable to change the CF card, or is currently unable to download files. Using either or all of the following, lower bit rate, lower resolution and a smaller frame rate will create a smaller file size for the same amount of recording time.

The digital video recorder can be used for either personal applications, mounted to a vehicle (removable), or the PCB can be integrated into clothing, a vehicle or other device. The unit could be used in a fixed installation to stream video over USB or wirelessly over Bluetooth RF

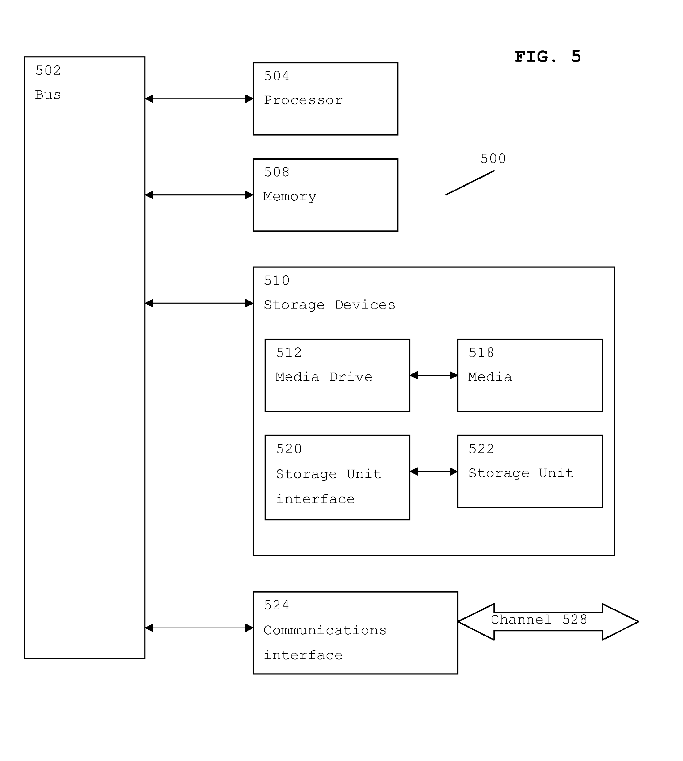

FIG. 5 illustrates a typical computing system 500 that may be employed to implement processing functionality in embodiments of the invention. Computing systems of this type may be used in any video and/or audio recorder and/or associated remote control unit. Those skilled in the relevant art will also recognize how to implement the invention using other computer systems or architectures. Computing system 500 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 500 can include one or more processors, such as a processor 504. Processor 504 can be implemented using a general or special-purpose processing engine such as, for example, a microprocessor, microcontroller or other control logic. In this example, processor 504 is connected to a bus 502 or other communications medium.

Computing system 500 can also include a main memory 508, such as random access memory (RAM) or other dynamic memory, for storing information and instructions to be executed by processor 504. Main memory 508 also may be used for storing temporary variables or other intermediate information during execution of instructions to be executed by processor 504. Computing system 500 may likewise include a read only memory (ROM) or other static storage device coupled to bus 502 for storing static information and instructions for processor 504.

The computing system 500 may also include information storage system 510, which may include, for example, a media drive 512 and a removable storage interface 520. The media drive 512 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 518 may include, for example, a hard disk, floppy disk, magnetic tape, optical disk, CD or DVD, or other fixed or removable medium that is read by and written to by media drive 512. As these examples illustrate, the storage media 518 may include a computer-readable storage medium having particular computer software or data stored therein.

In alternative embodiments, information storage system 510 may include other similar components for allowing computer programs or other instructions or data to be loaded into computing system 500. Such components may include, for example, a removable storage unit 522 and an interface 520, such as a program cartridge and cartridge interface, a removable memory (for example, a flash memory or other removable memory module) and memory slot, and other removable storage units 522 and interfaces 520 that allow software and data to be transferred from the removable storage unit 518 to computing system 500.

Computing system 500 can also include a communications interface 524. Communications interface 524 can be used to allow software and data to be transferred between computing system 500 and external devices. Examples of communications interface 524 can include a modem, a network interface (such as an Ethernet or other NIC card), a communications port (such as for example, a universal serial bus (USB) port), a PCMCIA slot and card, etc. Software and data transferred via communications interface 524 are in the form of signals which can be electronic, electromagnetic, and optical or other signals capable of being received by communications interface 524. These signals are provided to communications interface 524 via a channel 528. This channel 528 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product' 'computer-readable medium' and the like may be used generally to refer to media such as, for example, memory 508, storage device 518, or storage unit 522. These and other forms of computer-readable media may store one or more instructions for use by processor 504, to cause the processor to perform specified operations. Such instructions, generally referred to as 'computer program code' (which may be grouped in the form of computer programs or other groupings), when executed, enable the computing system 500 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 500 using, for example, removable storage interface 520, drive 512 or communications interface 524. The control logic (in this example, software instructions or computer program code), when executed by the processor 504, causes the processor 504 to perform the functions of the invention as described herein.

Storage media 518 or storage unit 522 may therefore provide a computer-readable storage element, having computer-readable code stored thereon for programming signal processing logic to perform a method for recording on a multi-channel digital video recorder (100). The computer-readable code may comprise code operable for performing the method of the invention.

It will be appreciated that, for clarity purposes, the above description has described embodiments of the invention with reference to different functional units or logic elements or signal processors. However, it will be apparent that any suitable distribution of functionality between different functional units or logic elements or signal processors, for example with respect to the UE, may be used without detracting from the invention. For example, it is envisaged that functionality illustrated to be performed by separate processors or controllers or logic elements may be performed by the same processor or controller or logic element. Hence, references to specific functional or logical units are only to be seen as references to suitable means for providing the described functionality, rather than indicative of a strict logical or physical structure or organization.

Some aspects of the invention may be implemented in any suitable form including hardware, software, firmware or any combination of these. The invention may optionally be implemented, at least partly, as computer software running on one or more data processors and/or digital signal processors. Thus, the elements and components of an embodiment of the invention may be physically, functionally and logically implemented in any suitable way. Indeed, the functionality may be implemented in a single unit, in a plurality of units or as part of other functional units.

Although the invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Thus, a method and apparatus for recording video and/or audio has been described, which substantially addresses at least some of the shortcomings of past and present techniques and/or mechanisms.

## Claims

1. A multi-channel digital video recorder (100), adapted to record video input signals from at least two sources (102, 104, 110, 112, 114), the multi-channel digital video recorder (100) comprising:
MPEG codec means (118,120), for generating MPEG data from the video input signals, the MPEG codec means operating according to a set of recording parameters;
memory means (126x, 126y, 146) for storing MPEG data from the MPEG codec means (118, 120);
wherein the multi-channel digital video recorder (100) is adapted to allow a user to select the set of recording parameters from a plurality of sets of recording parameters.

2. The multi-channel digital video recorder (100) of claim 1, wherein the set of recording parameters comprises pre-defined values for the parameters: bit rate; image resolution; and frame rate.

3. The multi-channel digital video recorder (100) of claim 1 or claim 2, further comprising:
(i) a memory buffer (126x, 146); and
(ii) an activation button;
wherein:
(iii) the memory buffer (126x, 146) is adapted to store a portion of the MPEG data, prior to operation of the activation button; and
(iv) the multi-channel digital video recorder (100) is adapted to save the portion of the MPEG data from the memory buffer (126x, 146), when the activation button is operated.

4. The multi-channel digital video recorder (100) of claim 3, wherein the set of recording parameters comprises a predefined value for the duration of the portion of the MPEG data stored in the memory buffer (126x, 146).

5. The multi-channel digital video recorder (100) of any previous claim, comprising:
a separate MPEG codec for each source;
wherein the multi-channel digital video recorder (100) is adapted to allow a user to select a different set of recording parameters for each MPEG codec, from the plurality of sets of recording parameters.

6. The multi-channel digital video recorder (100) of any previous claim, wherein the predefined values for the individual parameters in each set of recording parameters can be changed by a PC, a laptop or a PDA, thereby creating a new set of recording parameters, and the new set of recording parameters can be uploaded to the multi-channel digital video recorder (100).

7. The multi-channel digital video recorder (100) of any previous claim, adapted to record the MPEG data from each of the video input signals to an independent, full size file.

8. The multi-channel digital video recorder (100) of any previous claim, wherein the multi-channel digital video recorder is adapted to be portable.

9. A multi-channel digital video recording system (100, 200), comprising:
a recording unit (100), adapted to record video input signals from at least two sources (102, 104, 110, 112, 114), the recording unit (100) comprising;
(i) MPEG codec means (118,120), for generating MPEG data from the video input signals, the MPEG codec means operating according to a set of recording parameters;
(ii) Memory means (126x, 126y, 146) for recording MPEG data from the MPEG codec means (118, 120);
a remote control unit (200), for controlling the recording unit (100), comprising:
(iii) wireless communication means, adapted to communicate with the recording unit (100); and
(iv) a user interface element (214, 216);
wherein the remote control unit (200) is adapted to allow a user to select the set of recording parameters from a plurality of sets of recording parameters, remotely.

10. The multi-channel digital video recording system (100, 200) of claim 9, wherein the remote control unit (200) is further adapted to display (214, 216) at least one of: video signals currently being received; video signals recorded previously; battery status of the digital video recorder; memory status of the digital video recorder.

11. The multi-channel digital video recording system (100, 200) of claim 9 or claim 10, wherein the remote control unit (200) is adapted to be separably coupled mechanically to the recording unit (100).

12. A remote control unit (200) for controlling a multi-channel digital video recording unit (100), wherein the remote control unit (200) comprises:
wireless communication means, adapted to communicate with the multi-channel digital video recording unit (100); and
a user interface element (214, 216);
wherein the remote control unit (200) is adapted to allow a user to remotely re-configure a set of recording parameters of an MPEG codec means of the video recording unit (100) from a plurality of sets of recording parameters.

13. A method for recording on a multi-channel digital video recorder (100) comprising:
recording video input signals on the multi-channel digital video recorder (100) from at least two sources (102, 104, 110, 112, 114);
generating MPEG data from the video input signals according to a set of recording parameters; and
storing the generated MPEG data from the MPEG codec means (118, 120);
wherein the method is **characterised by**:
providing an opportunity for a user to select the set of recording parameters from a plurality of sets of recording parameters.

14. A method for recording on a multi-channel digital video recording system comprising:
recording video input signals from at least two sources (102, 104, 110, 112, 114);
generating MPEG data from the video input signals according to a set of recording parameters;
storing MPEG data from the MPEG codec means (118, 120);
providing an opportunity to a user of said multi-channel digital video recording system to remotely control said recording unit (100) by selecting the said set of recording parameters from a plurality of sets of recording parameters.

15. A computer-readable storage element (518, 522) having computer-readable code stored thereon for programming signal processing logic to perform a method for recording on a multi-channel digital video recorder (100), wherein the computer-readable code comprises code operable for performing the method of claim 13.
